Europäisches Patentamt

European Patent Office

Office européen des brevets

(11) Publication number: **0 258 210**
**B1**

(12) **EUROPEAN PATENT SPECIFICATION**

(45) Date of publication of patent specification: **16.08.90**

(51) Int. Cl.⁵: **F 16 C 33/10**

(21) Application number: **85901649.5**

(22) Date of filing: **28.03.85**

(86) International application number:
**PCT/SE85/00138**

(87) International publication number:
**WO 86/05848 09.10.86 Gazette 86/22**

(54) **HYDRAULIC SLIDE BEARING UNIT.**

(43) Date of publication of application:
**09.03.88 Bulletin 88/10**

(45) Publication of the grant of the patent:
**16.08.90 Bulletin 90/33**

(84) Designated Contracting States:
**AT BE CH DE FR GB IT LI LU NL SE**

(56) References cited:
**DE-A-2 742 516**
**DE-A-3 117 746**
**SE-A- 211 185**
**SE-B- 416 577**

(73) Proprietor: **Schnittger, Jan R.**
**249, Promenade des Anglais**
**F-06200 Nice (FR)**

(72) Inventor: **Schnittger, Jan R.**
**249, Promenade des Anglais**
**F-06200 Nice (FR)**

(74) Representative: **Lindblad, Sture**
**FAMTEC Box 7574**
**S-103 93 Stockholm (SE)**

Courier Press, Leamington Spa, England.

## Description

The present invention relates to hydrodynamic slide bearing units of radial type as well as axial type, which are adapted for self-circulation of the lubricant.

Hydrodynamic radial slide bearings are well known, working with enough lubricant between shaft and bearing cup that the lubricant will build up a thin, supporting film with important over pressure within the loaded pressure zone. It is also known to use this fact to obtain a pump effect to circulate the lubricant in circulation around the bearing through a channel situated outside the "tribologic" surfaces.

Conventional hydrodynamic slide bearings, when carefully constructed, give practically no bearing wear at all and are used in the technique for a large number of different cases of service making great demands upon reliability, lifetime, capacity of resisting vibrations and heat, as well as in such machines where silent running is desired.

In spite of the many advantages with a hydrodynamic bearing construction there are certain disadvantages, however, such as the assembly of a number of separate bearing parts, depending on outer circulation systems with pumps, coolers, etc, which may entail high costs for installation and maintenance. It is also necesssary to work the rotary shaft or the supporting axial disc so as to obtain a surface smoothness corresponding to the demands of the hydrodynamic lubrication, i.e. a few micrometers. This may involve great difficulties, for instance when it comes to working of shafts with rotors for large turbines, generators, etc. This also applies to the renova tion of worn-out supporting shaft or support surfaces.

These prior art bearings have a lubricant reser voir situated outside the bearing, and the bearing construction must thus be built up of several units, if desired including connecting channels in the form of tubes or hoses. Such a construc tion is known from Patent Specification US—A—3,940,189 (SE—B—416,577). However, such constructions have not found a wide practi cal use and constitute complicated and unpracti cal constructions.

The object of the present invention is to retain all the good properties of conventional hydrody namic slide bearings and to achieve new advan tages while eliminating the above-mentioned dis advantages.

With this invention a hydrodynamic, closed slide bearing with self-circulation and a lubricant reservoir integrated in the bearing has been obtained for the first time, which slide bearing is a complete and separate machine element with the same possibilities of being built into bearing constructions as for roller bearings. As the con struction of the bearing is provided with e.g. light bearing races, which are easy to manufacture with good surface fineness, favourable conditions have also been created for inexpensive mass production based on simple materials such as tube blanks or pressed sheet metal.

An important advantage with the inventive bearing and its function is that an efficient sealing means has been obtained to prevent lubricant leakage from the reservoir and thus from the bearing unit. This applies statically during standstill and during laying up units on bearings as well as dynamically during operation. The seal has small friction and thus low temperature rise in the bearing. The leakage through the seal from the supporting lubricant film of the bearing is insig nificant and has been reduced to such a level that the bearing will retain its entire functionability also after long service time.

The described advantages refer to a hydraulic slide bearing unit having two relatively movable surfaces, a first race surface in a housing and a second race surface on a shaft sleeve, between said surfaces there is built up in a fluid lubricant layer at least one load-bearing pressure zone the pressure of which in the direction of movement will increase from an initial pressure at the frontal portion of the pressure zone to a higher pressure around the most central part of the pressure zone and then decrease to the initial pressure, the bearing including at least one feed opening for lubricant at or ahead of that portion of the pressure zone which is foremost as counted in the direction of movement or flow, an outtake means for collection of lubricant from the pressure zone and a return means to feed back the lubricant from the outtake means to the lubricant layer of the load bearing pressure zone through said feed opening whereby the fluid lubricant has a defined volume, the outtake means of the slide bearing section comprises oblong pressure relief openings of defined length situated downstream of the feed opening on both sides of the pressure zone and generally extending in the direction of movement, in order to relieve those portions of the bearing surfaces which are situated outside the relief openings from the higher pressure prevailing in the hydrodynamic load-bearing pressure zone thereby eliminating the leakage flow perpendicu lar to the flow direction and to convey the lubricant volume at a pressure higher than the initial pressure to return means being located outside the boundary layer of the race surfaces and comprising a closed annular oil compartment arranged in a space outside of the race surfaces and, due to a pump effect produced by the higher input pressure and the lower exit pressure, to pass the lubricant volume through the oil compartment to the feed opening, the lubricant volume thus being pumped through, in order, the feed open ing—the return means with the oil compartmen t—and back to the feed opening in a closed loop circulation completely confined within the bearing unit.

A second embodiment has an outer annular housing adapted to be mounted in a bearing seat and a first, inwardly turned bearing race, taking the form of a surface of revolution, an annular shaft sleeve to receive the shaft or journal and with an outwardly turned rotatable second bearing race adapted to coact with the first race as hydrodynamic bearing during the relative rotation of the races, annular sealing means arranged between the stationary housing and the mobile sleeve preventing the lubricant from penetrating out of the bearing unit.

In a third embodiment the bearing unit consists of a radial bearing having cylindrical races, the relief openings extend along part of the circumference of a first cylindrical race surface, formed in the stationary housing, and the sealing means consist of sealing rings arranged axially outside each relief opening.

In a fourth embodiment there is at least one communication between the oil compartment and a feed opening arranged in the stationary race on the unloaded side of the hydrodynamic bearing.

In a fifth embodiment the pressure relief openings consist of pressure relief grooves situated at some distance inside the sealing elements in the stationary race on the loaded side of the race preferably within an angle between 90° and 270° along the circumference of the race, the angle of the feed opening being 0°, said grooves being connected with the oil compartment.

In a sixth embodiment an opening is situated diametrically opposite the pressure relief grooves for supply of oil from the oil compartment to the lubricant layer.

In a seventh embodiment the oil compartment is arranged in the outer housing and defined by two concentric tubes and two annular plane side discs which have communication channels with a chamber between the side discs, and sealing rings, the sealing rings arranged outside said discs and lying in sealing contact with the inner shaft sleeve.

In an eighth embodiment the bearing is an axial bearing including at least two slide bearing sections having race surfaces arranged transversely to the axis of rotation, each section including a lubricant layer converging in the direction of movement and thus forming a load bearing pressure zone being part of an annular race, the feed openings have a radial extent, while relief openings are part of a circular or arcuate path respectively outside and inside the pressure zones, and the sealing means consist of annular, cylindrical axial seals arranged respectively outside and inside the relief openings.

In a nineth embodiment sealing means are arranged between the stationary and mobile parts of the bearing unit, said sealing means preventing the lubricant from penetrating out of the bearing unit.

In a tenth embodiment the annular shaft sleeve has a radial extension such as to accommodate at either end surface an annular seat or recess between the second race and the inner cylindrical surface for receiving the shaft or journal. Annular sealing elements are mounted in said seats and adapted in rotary sealing contact with annular plane side discs of the ends of the housing.

In an eleventh embodiment there is formed at one or both ends of the annular circular-cylindrical shaft sleeve race a truncated conical bearing race having its base adjacent the circular-cylindrical bearing race, said truncated bearing race allowing an axial load on the bearing unit.

In a twelfth embodiment the bearing unit consists of a combined radial and axial bearing allowing axial and radial loads in either direction as well as some angular deviation of the shaft relative to the housing by comprising an outer annular housing having a first stationary, inwardly turned spherical bearing race, an annular shaft sleeve fixed to the shaft having a second spherical bearing rotating race formed on the surface of a spherical ball having its center on the axis of rotation, adapted to coact with the first spherical bearing race as a hydrodynamic bearing during the relative rotation of the races, and relief openings extending mainly perpendicular to the shaft along part of the periphery of the first spherical bearing race.

In a thirteenth embodiment the bearing unit consists of an axial bearing comprising an annular shaft sleeve taking the form of a spherical cap defined by two spherical coaxial surfaces the axes of which coincide with the axis of rotation and further defined by an outer cylindrical surface the axis of which also coincides with the axis of rotation, the spherical surfaces of the cap being respectively convex and concave and forming bearing races, an outer annular housing defined by an outer cylindrical wall joined to annular end plates, said housing having two or more slide bearing sections in the form of circular sectors and having sector-shaped bearing supports arranged in pairs to coact with the respective opposite convex and concave spherical races of the cap.

In a fourteenth embodiment the oil compartment, the feed opening and outtake means of a circular sector slide bearing structure are bounded by radial walls extending from the annular end walls of the bearing unit, the radial walls defining the distance between the support plates and hence also defining the play between the stationary circular sector races and the rotating cap-shaped sleeve.

The invention will now be described more fully with reference to the accompanying drawings in which:

Figure 1 is a longitudinal section of a conventional hydrodynamic slide bearing through the axis thereof;

Figure 2 is a section through the bearing on line II—II in Figure 1;

Figure 3 is a spread view of the bearing race along the circumference of a bearing according to the invention;

Figure 4 shows the pressure distribution along the center line for the periphery of the bearing race in Figure 3;

Figure 5 is a horizontal section on line V—V in Figure 2 of a bearing according to the invention through the axis of the bearing;

Figure 6 shows the right-hand half of the bearing unit as seen in the direction indicated by VI in Figure 5;

Figure 7 is a section through the sealing means of the bearing on line VII—VII in Figure 6;

Figure 8 is section on line VIII—VIII in Figure 5;

Figure 9 is a section on line IX—IX in Figure 5;

Figure 10 shows one bearing race, as seen in the load direction, in an axial slide bearing; and

Figure 11 is a section on line XI—XI in Figure 10.

Figure 12 is a horizontal section on line XII—XII in Figure 6;

Figure 13 is a section on line XIII—XIII in Figure 12;

Figure 14 is a horizontal section through a bearing with spherical races taken on line XIV—XIV in Figure 15;

Figure 15 is a section on line XV—XV in Figure 14;

Figure 16 is a horizontal section through an axial bearing unit on line XVI—XVI in Figure 17;

Figure 17 is a section on line XVII—XVII in Figure 16;

Figure 18 is a section on line XVIII—XVIII in Figure 17,

Figure 19 is a section on line XIX—XIX in Figure 17, and

Figure 20 is a section on line XX—XX in Figure 17.

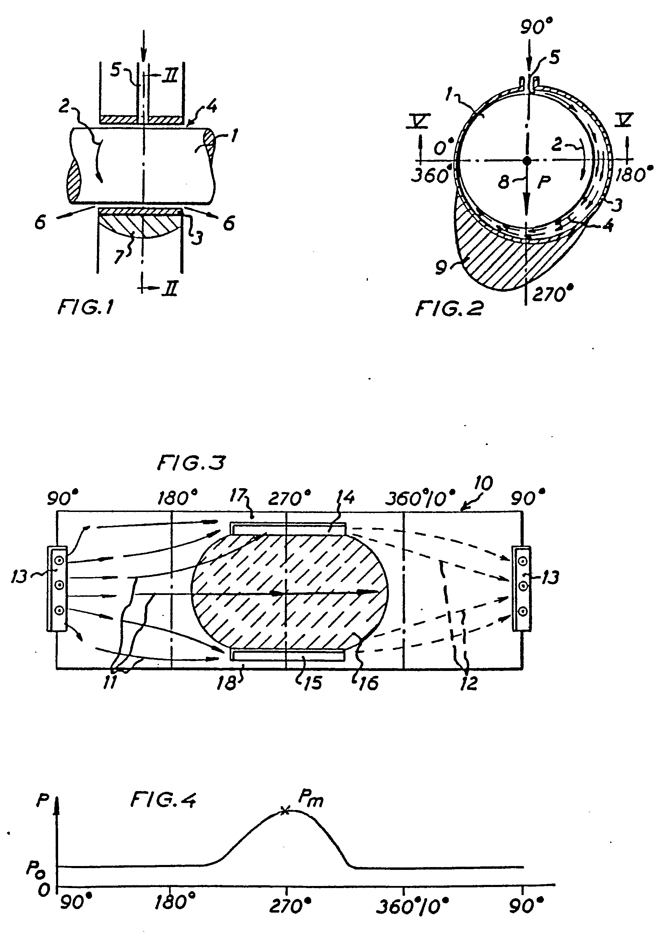

In Figure 1 the rotary shaft supported by the bearing and rotating in the direction of the arrow 2 is designated by 1. The stationary bearing race is designated by 3, and 4 is a supporting lubricant film. The lubricant is supplied to the bearing through a channel 5 and the arrows 6 indicate the leakage of lubricant from the bearing. The pressure distribution in the section in the axial direction of the bearing is indicated by the hatched surface 7.

In Figure 2, numerals 1—5 designate the same parts as in Figure 1. The arrow 8 indicates the load carried by the bearing and the hatched surface 9 indicates the pressure distribution in the supporting lubricant film 4 in the direction of rotation of the axis.

Figure 3 is a spread view of a stationary race 10 according to the invention for a radial bearing and surrounding the rotary component, i.e. a shaft provided with a sleeve, in a hydrodynamic bearing. The flow paths for the circulating lubricant flow have been drawn in the figure and the lubricant flow streaming up to the supporting lubricant film between the bearing and the shaft has been indicated by full lines 11 and the flow from the return lubricant flowing from the supporting film outside the stationary race 10 is indicated by broken lines 12. The full lines 11 thus indicate the flow of the lubricant in the bearing proper while the broken lines 12 indicate the leakage or outlet flow in outer return channels. Angular positions from 0° to 360° along the bearing cup have been indicated in the same manner as in Figure 2, 90° indicating the position in which the lubricant is supplied and 270° the direction in which the load 8 acts on the bearing.

Figure 3 shows a complete slide bearing structure as defined above: the feed opening 13 for lubricant up to the bearing lubricant film, the pressure zone of which has been designated by 16 and marked with dashed hatching. Two pressure relief openings 14 and 15 extend generally in the main direction of the flow. In the case shown the openings 14, 15 extend along part of the circumference of the stationary race 10 at the axial ends of the bearing for leading away and returning lubricant under pressure from the supporting lubricant film to the lubricant reservoir of the bearing. In this way those portions 17, 18 of the stationary race 10 which are situated outside the openings will not be exposed to pressure.

Figure 4 shows the pressure in the center of the race as a function of the angle along the circumference. As is apparent from the figure a certain low pressure $p_o$ in the lubricant film prevails in the range from 90° and an angle thereafter—up to ca 180°—as well as at an angle between ca 360° and up to 90°, which depends on a rest flow of lubricant in the film. From the figure it appears that the initial pressure $p_o$ in the center of the supporting film increases to a maximum value $p_m$ around the angular position 270° and then it decreases again towards $p_o$ at the feed opening 13.

The maximum pressure $p_m$ of the supporting lubricant film in the pressure zone 16 thus lies around the angular position 270°. The major part of the lubricant is led out into a return channel through the openings 14 and 15 and only a very insignificant axial leakage remains to return in another way to the lubricant reservoir. The residual flow following the rotary race throughout the entire revolution of rotation is favourable for the lubrication of the bearing. This residual flow continues to the feed opening at the angular position 90° where also the return channels for the flow on the outside of the race 10—the dashed flows 12—open for feeding of circulating lubricant through the opening 13 to the supporting layer film.

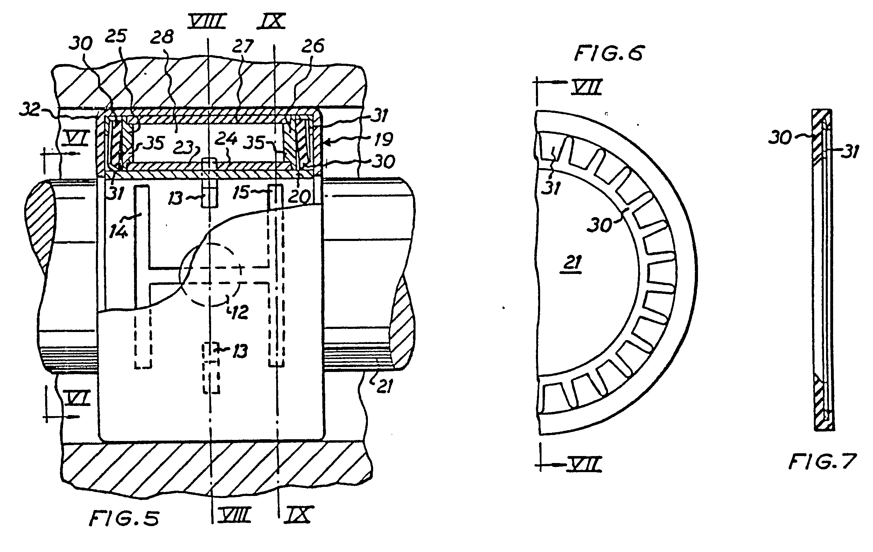

Figure 5 shows a section through an embodiment of a bearing unit according to the invention. The rotary race consists of a shaft sleeve 20 which is mounted with slide fit on the rotary shaft 21 the load of which is to be supported. The stationary race 20 is provided on the inner surface of a cylindrical tubular bearing cup 24. This is built together with side discs 25, 26 and a tubular piece 27. The parts 24, 25, 26 and 27 form a torus-shaped chamber 28 which functions both as return channel and as a lubricant reservoir.

The pressure in the lubricant film in the slide surface between the rotary shaft sleeve 20 and the stationary bearing cup 24 generates, in spite of the relief openings 14, 15, a certain axial leak flow which would leak out from the bearing unit if the outflow was not prevented by some form of seal.

In the embodiment shown two rubber ring seals 30 have therefore been placed immediately outside the side discs 25 and 26. The rubber ring seals 30 are pressed lightly against the rotary shaft sleeve 20 by means of annular, inwardly dented steel ring springs 31 which are made in one piece with the rubber seal ring 30, as will appear in more detail from Figures 6 and 7.

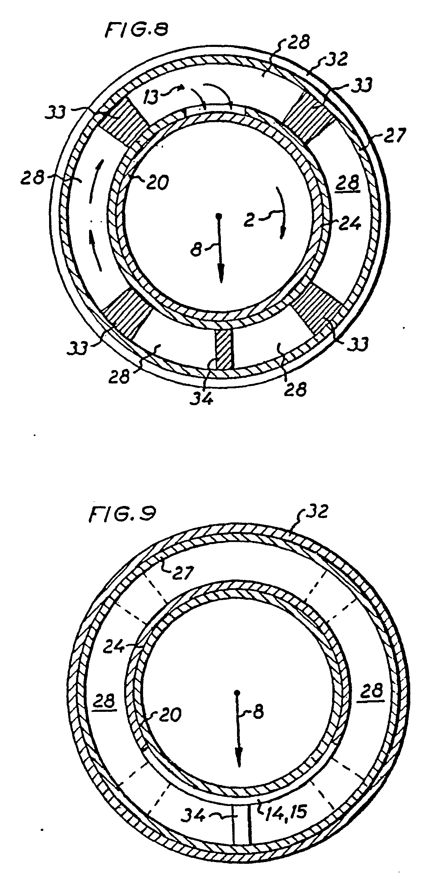

All the mentioned elements 24—27 and 30—31 are enclosed in an outer housing with a cylindrical outer surface and ring shaped end walls which are extended radially inwards so far that they will prevent the shaft sleeve 20 from sliding out of the bearing unit in axial direction. There is thus formed a complete prefabricated hydrodynamic slide bearing unit consisting of a bearing sleeve 20 and an outer housing 19 composed of the elements 24—27 and 30—32 and containing an oil reservoir in the form of an annular oil compartment 28. The circulation of lubricant is controlled by the elements and details illustrated in Figures 8 and 9.

Figure 8, which represents a section through the center of the bearing unit, shows, on one hand, how the bearing cup 24 is centered by means of four supports 33 exactly also in the most central portion of the bearing while the side discs 25 and 26 have this function with respect to the end portions of the bearing cup 24. The figure also shows how a baffle wall 34 divides the return channel, e.g. the torus-shaped chamber 28, into two halves of 180° on either side of the plane through the loading direction 8 and how the supply opening 13 is arranged with 180° displacement in relation to the baffle wall 34.

The arrangement will thus cause that the return channel 28 between the elements 24, 25, 26 and 27 will be divided into two compartments, each in the form of a half torus, viz a left-hand and a right-hand part according to Figure 8. Thus the circulation in the return channel 28 can take place either via one side half or the other side half of the channel, i.e. on one side or the other of the plane through the loading direction 8 of the bearing.

Figure 9 shows position and dimensioning of the relief openings 14 and 15. As these openings are situated at the pressure zone lubricant will pass through the openings and out into the return channel 28 during operation. In the embodiment according to this figure the openings have a symmetric extent around the loading plane 8 in spite of the fact that a loading according to Figure 8 would lead to a slightly asymmetric pressure distribution and a preference for the formation of a corresponding asymmetric flow pattern.

When the direction of rotation is constant a modified shape and another position of the openings 14 and 15 may be more favourable with respect to the pressure distribution in the supporting hydrodynamic lubricant film. The construction shown and described above relates to a radial bearing which functions equally well in both directions of rotation of the bearing. Also the positioning of the side wall 34 is dependent on this symmetry and a modification of the position of this wall is to be preferred if the bearing is to be optimized for only one direction of rotation.

In spite of the pressure relief openings 14, 15 a certain minor axial side leakage will arise, especially at the pressure zone 16. During operation the shaft sleeve 20 will thus rotate and exert a certain centrifugal action upon the lubricant which may leak out into the space between the side discs 25 and 26 and the rubber ring seals 30. The lubricant will therefore have a certain natural flow movement in radial direction and will thereby be forced to return via the channels 14, 15, 28 to the feed opening 13.

The bearing described is a radial bearing for receiving load at right angles to the axis of rotation. The rotary bearing surface consists of a shaft sleeve 20 the outer surface of which is finely processed to serve as a bearing surface. One may also let the relatively rotating parts of the bearing unit change place, i.e. so that the rotary part consists of a sleeve enclosing the reservoir 28, while the inner surface of the sleeve is worked so as to constitute a bearing surface.

The invention may also be applied to hydrodynamic axial bearings where the rotary bearing surface consists of a suporting circular disc while the stationary reservoir part has a bearing surface with a saw-tooth shaped surface in the direction of rotation with relief openings at the radially inner and outer portions of the closed bearing unit. The various embodiments described above in connection with the description of a radial bearing may also be applied to an axial bearing with the modification caused by the fact that the race in first case is cylindrical and in the latter case ring-shaped.

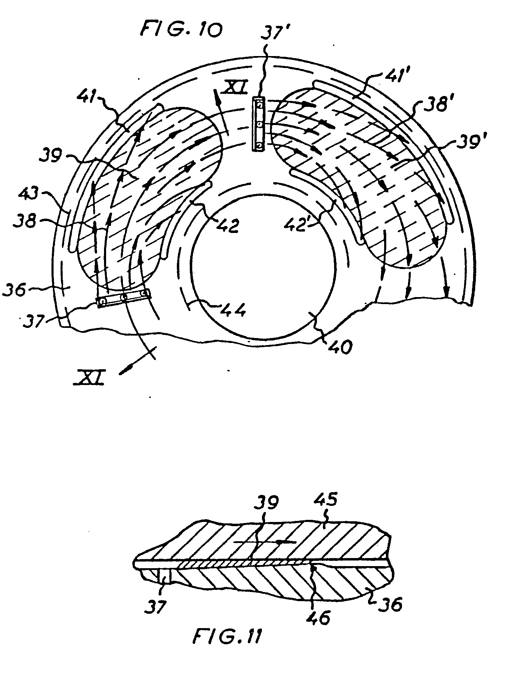

Figure 10 thus shows the stationary bearing surface 36 of an axial bearing. The lubricant is introduced through inlet openings 37 and 37' which are generally radially directed. From there the lubricant is led with the flow 38, 38' by means of the rotary race into the pressure zones 39 and 39' respectively. The pressure zones are defined along their outer part by pressure relief openings 41 and 41' respectively and at their inner part of corresponding pressure relief openings 42, 42'. From the pressure relief openings the lubricant is carried, in a manner similar to that described above, to the following inlet opening, for instance to the opening 37' from the openings 41, 42. Outside the outer pressure relief openings 41, 41' there is a annular surface against which a circular-cylindrical sealing means, indicated by numeral 43, makes a seal between the relatively movable parts of the bearing unit so that no or only insignificant leakage will occur from the bearing unit.

In the same way a corresponding sealing means, indicated with the broken line 44, is arranged inside the inner pressure relief openings 42, 42'.

In the center of the bearing unit there is an opening 40 adapted to receive the shaft the axial load of which is transferred to the rotary bearing part (not shown) which thus is supported by the annular lubricant film.

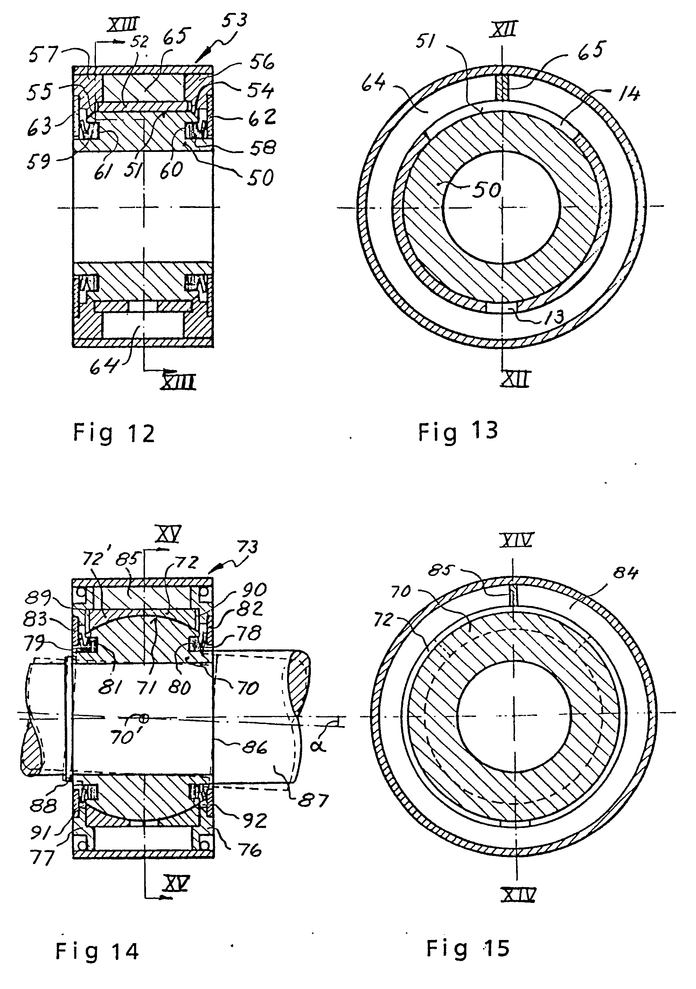

Figure 11 shows a section along a cylinder surface situated centrally in the ring-shaped bearing surface. This figure shows the bearing part 45 rotating with the shaft and receiving the axial load. The stationary race 36 is shown in the lower part of the figure as well the inlet opening 37 and the lubricant film in the pressure zone 39. The figure also shows the wedge-shaped portion 46 of the race 36 which effects the pressure rise in the pressure zone during the rotation of the parts.

Figure 12 shows a section through a further embodiment of a bearing unit according to the invention. The rotary race consists of a shaft sleeve 50 which is mounted on a rotary shaft the load of which is to be supported. The sleeve 50 has a cylindrical outer race 51 coacting with the stationary race 52 of the housing 53. At the ends of the shaft sleeve 50 there are truncated conical races 54, 55 having their bases adjacent the cylindrical race 51. The housing 53 has at either end annular side rings 56, 57 forming the ends of the housing. At their inner diameter the side rings 56, 57 have a truncated conical race coacting with the races 54, 55. Due to the conical races the bearing unit can take a minor axial load in one or both directions from the shaft sleeve 50 or the shaft carrying said sleeve.

The embodiment in Figure 12 also has sealing elements 58, 59 seated in recesses 60, 61 respectively, shaped at the ends of the shaft sleeve 50, the recesses extending radially between the outer race 51 and the inner diameter of the shaft sleeve 50. The sealing elements in this way can be recessed and placed inside the ends of the stationary race 52 thereby decreasing the total length of the bearing unit. The sealing elements 58, 59 are sealingly coating with annular plane discs 62, 63 at the outside of the annular side rings 56, 57. The design in Figure 12 mainly has a design corresponding to the unit shown in Figure 5, the design also producing a self-contained hydraulical bearing unit.

The concept of the embodiment shown in Figure 12 mainly corresponds to the one of the embodiment shown in Figure 5 also with respect to oil compartments, relief openings and feed opening.

Figure 13 represents a section through the bearing unit shown in Figure 12. In the figure numeral 64 denotes an oil compartment corresponding to the one denoted by 28 in Figure 5. 14 is one of a pair of axially separated elongate relief openings and a baffle wall 65 has the same function ws the corresponding wall denoted by 34 in Figure 8.

The embodiment shown in Figure 14 has a shaft sleeve 70 in the shape of a spherical ball having its center at 70' on the axis of the shaft and a spherical race 72. The shaft sleeve 70 is fixed to a shaft 87 having a shoulder 86 abutting the shaft sleeve 70 and kept in place by a spring retention ring 88 seated in a recessed groove in the shaft having the smaller diameter and abutting the shaft sleeve 70 in axial direction. The shaft sleeve 70 is fixed to the shaft by a key in a way known per se.

In Figure 14, numerals 72 and 72' denote the stationary concave spherical race of the housing 73 and 76, 77 are annular side rings of the housing, 78, 79 sealing elements, 80, 81 recesses for the ring seals, 84 is a lubricant reservoir or oil compartment and 85 is a baffle wall.

Due to the spherical race 71 of the embodiment in Figure 14 the shaft 87 is allowed a moderate angular deviation α from the center line of the housing 73.

In Figure 15 same numerals refer to the same parts as in Figure 14. Thus numeral 85 denotes a baffle wall in the oil comparment 84. It is also to be noted that the stationary race is formed by the juxtaposition of the two identical halves 72, 72' arranged symmetrically to the transverse central section plane XV—XV of the bearing housing 73. At the outer ends of the races 72, 72' there are radial slots 89, 90 defining passages between the oil compartment 84 and the annular return oil spaces 91, 92 of the compartments for the sealing elements 78, 79.

The embodiment shown in Figure 14 and Figure 15 can take radial loads as well as axial loads in opposite directions. The axial load taken by the bearing may amount to about 25% of the radial load.

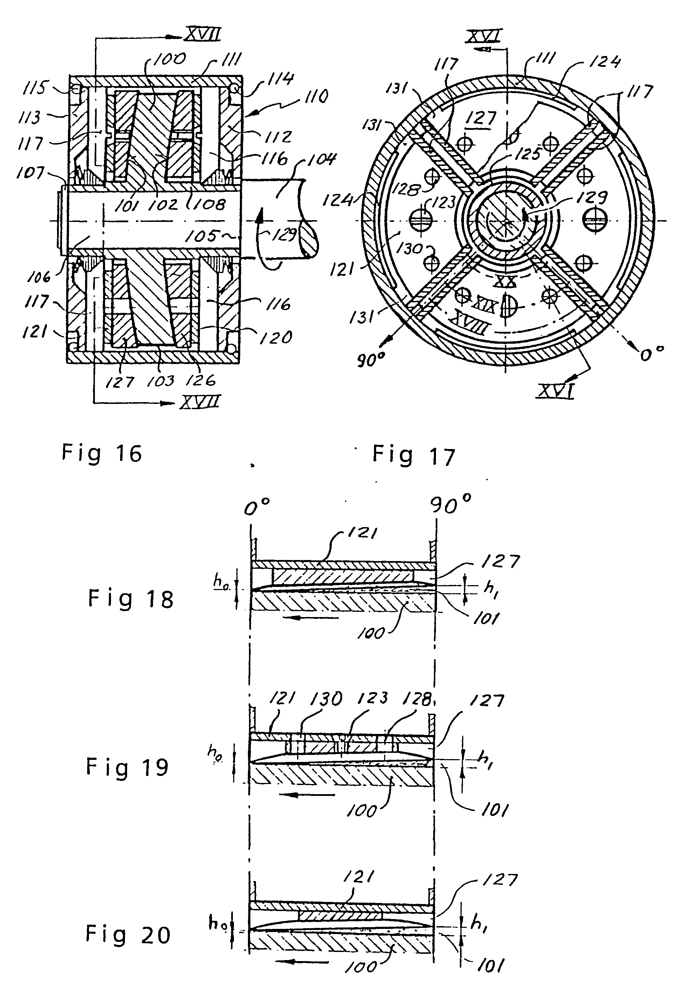

Figure 16 illustrates an embodiment of the invention in the form of an axial bearing. The shaft sleeve is denoted by 100 and has the shape of a spherical cap defined by a convex spherical race 101 and a concave spherical race 102, the outer limit of the sleeve being a cylindrical outer surface 103. The shaft sleeve 100 is carried by a shaft 104 having a shoulder 105 and a portion 106 of smaller diameter. The shaft sleeve 100 is fixed to the shaft 106 by its hub 108. The hub is axially fixed between the shoulder 105 and a spring retention ring 107 and non-rotary fixed by a key or in some other way known per se.

The stationary housing 110 comprises an outer cylindrical wall 111 to which are fixed two annular end walls 112, 113 e.g. by means of retention springs 114, 115. Inside the end walls 112, 113 there are arranged mainly radial baffle walls 116, 117, defining four circular sector shaped bearing structures each comprising an oil feed opening, a pressure zone, relief openings and oil feedback means to the oil opening. The bearing structures will be described in more detail later on. The baffle walls 116, 117 abut annular end walls 112, 113 and support plates 120, 121 ho which are fixed, e.g. by screws 122, 123, bearing supports 126, 127 arranged in pairs on either side of the spherical cap of the shaft sleeve 100 and adapted to the spherical races 101, 102 to form hydrodynamic bearing races.

Figure 17 illustrates a section XVII—XVII through the embodiment illustrated in Figure 16.

In Figure 17 the numerals given denote the same parts as in Figure 16. The figure illustrates the intersected baffle walls 117, arranged in four pairs distributed at equal angular intervals. The baffle walls abut the annular support plate 121 which extends all the way around beneath the baffle walls 117. Underneath the annular support plate 121, as seen in the Figure, there are four circular sector bearing supports 127 having radial shoulders 131 at the peripheral outer ends of the bearing supports, said supports defining an arcuate slot 124 for a return oil passage.

128 denotes an oil feed opening operative when the shaft rotates anti-clock wise as seen in Figure 17 and indicated by an arrow 129. The oil feed opening 130 is then inoperative. When the sense of rotation is changed the oil feed opening 130 will be operative and the opening 128 inoperative. An arcuate inner oil passage slot is denoted 125.

When the bearing operates in the sense of rotation as illustrated by arrow 129 the oil will be fed into the race through oil feed opening 128 and pass out of the hydrodynamic bearing structure defined by two pairs of baffle walls 117, via slots 124 and 125 at the sides of the pressure zone oil flow in the four race surfaces. From the oil compartment, defined by adjacent baffle walls 117 in the pair of walls, a quarter of the annular end wall 113 and a quarter of the annular support plate 121 the oil will be fed back through the feed opening at 128 to form a closed loop circulation of lubricant.

Figures 18, 19 and 20 illustrate intersections on concentric cylinder surfaces denoted by XVIII, XIX and XX, respectively, in Figure 17. The sections refer to one of the four slide bearing structures included in the embodiment illustrated in Figures 16 and 17 and are of the same character as the one illustrated in Figure 11 and viewed outwards from the center. The cylinder section XVIII—XVIII has the greater intersection radius and cylinder section XX—XX has the smallest radius. However, all sections in the figures have the same angular extension within 0° and 90° as indicated in Figure 17, said 90° sector extending from the centre radial plane of a pair of baffle walls 117 to the centre radial plane of the adjacent pairs of baffle walls.

In the Figures 18—20 the shaft sleeve 100 is intersected a small distance below the race surface 101. Between the bearing support 127 and the cap sleeve 100 there is formed a hydraulic pressure zone in a lubricant film due to the fact that at its front end the film has a thickness $h_1$ being greater than the thickness $h_0$ at its rear end thus defining a wedge shaped slot in the same way as described with reference to Figure 11. The thicknesses $h_1$ and $h_0$ are independent of the radii of the cylinder sections. The wedge angle or slope angle of attack, however, increases as the radius decreases, thus somewhat compensating a lower speed of the rotating bearing surfaces. The wedge angle thus is greater in Figure 20 than in Figure 18.

## Claims

1. Hydrodynamic slide bearing unit having two relatively movable surfaces, a first race surface (3) in a housing and a second race surface (1) on a shaft sleeve, between said surfaces there is built up in a fluent lubricant layer (4) at least one load-bearing pressure zone (9) the pressure (p) of which in the direction of movement will increase from an initial pressure ($p_0$) at the frontal portion of the pressure zone (16) to a higher pressure ($p_m$) around the most central part of the pressure zone (16) and then decrease to the initial pressure ($p_0$), the bearing including

at least one feed opening for lubricant at or ahead of that portion of the pressure zone which is foremost as counted in the direction of flow,

an outtake means for collection of lubricant from the pressure zone and

a return means to feed back the lubricant from the outtake means to the lubricant layer of the load bearing pressure zone through said feed opening (5), characterized in that

the fluid lubricant has a defined volume,

the outtake means of the slide bearing section comprises oblong pressure relief openings (14, 15; 41, 42, 41', 42') of defined length situated downstream of the feed opening (13; 37, 37') on both sides of the pressure zone (16; 39, 39') and generally extending in the direction of movement, in order to relieve those portions (17, 18; 43, 44) of the bearing surfaces which are situated outside the relief openings from the high pressure ($p_m$) prevailing in the hydrodynamic load-bearing pressure zone thereby eliminating the leakage flow perpendicular to the flow direction and to convey the lubricant volume at a pressure higher than the initial pressure ($p_0$) to

return means being located outside the boundary layer of the race surfaces and comprising a closed annular oil compartment (28) arranged in a space outside of the race surfaces and, due to a pump effect produced by the higher input pressure and the lower exit pressure ($p_0$), to pass the lubricant volume through the oil compartment to the feed opening (13; 37, 37')

the lubricant volume thus being pumped through, in order, the feed opening—the pressure zone boundary layer—the outtake means—the return means with the oil compartment and back to the feed opening in a closed loop circulation completely confined within the bearing unit.

2. Hydrodynamic slide bearing unit as claimed in claim 1, characterized in

an outer annular housing (19) adapted to be mounted in a bearing seat and having a first, inwardly turned bearing race (23), taking the form of a surface of revolution,

an annular shaft sleeve (20) to receive the shaft or journal (21) and with an outwardly turned rotatable second bearing race adapted to coact with the first race (23) as a hydrodynamic bearing during the relative rotation of the races,

annular sealing means (30) arranged between the stationary housing (19) and the mobile sleeve (20) preventing the lubricant from penetrating out of the bearing unit.

3. Hydrodynamic slide bearing unit as claimed in claim 2, wherein the bearing unit consists of a radial bearing having cylindrical races, the relief openings (14, 15) extend along part of the circumference of a first cylindrical race surface formed in the stationary housing, and the sealing means (30) consist of sealing rings arranged axially outside each relief opening.

4. Hydrodynamic slide bearing unit as claimed in claim 2, comprising at least one communication between the oil compartment (28) and a feed opening (13) arranged in the stationary race on the unloaded side of the hydrodynamic bearing.

5. Hydrodynamic slide bearing unit as claimed in claim 4, wherein the pressure relief openings (14, 15) consist of pressure relief grooves (14, 15) situated at some distance inside the sealing elements (30) in the stationary race (23) on the loaded side of the race, preferably within an angle between 90° and 270° along the circumference of the race, the angle of the feed opening being 0°, said grooves (14, 15) being connected with the oil compartment (28).

6. Hydrodynamic slide bearing unit as claimed in claim 5, comprising an opening (13) situated diametrically opposite the pressure relief grooves (14, 15) for supply of oil from the oil compartment (28) to the lubricant layer.

7. Hydrodynamic slide bearing unit as claimed in any of the preceding claims, wherein the oil compartment (28) is arranged in the outer housing (29) and defined by two concentric tubes (24, 27) and two annular plane side discs (25, 26) which have communication channels (35) with a chamber between the side discs and sealing rings (30), the sealing rings (30) arranged outside said discs and lying in sealing contact with the inner shaft sleeve (20).

8. Hydrodynamic slide bearing unit as claimed in claim 1 or 2, wherein the bearing is an axial bearing including at least two slide bearing sections having race surfaces arranged transversely to the axis of rotation, each section including a lubricant layer converging in the direction of movement and thus forming a load bearing pressure zone (39, 39') being part of an annular race, the feed openings (37, 37') have a radial extent, while relief openings (41, 42, 41', 42') are part of a circular or arcuate path respectively outside and inside the pressure zones (39, 39'), and the sealing means (43, 44) consist of annular, cylindrical axial seals (43, 44) arranged respectively outside and inside the relief openings (41, 42, 41', 42').

9. Hydrodynamic slide bearing unit as claimed in claim 8, comprising sealing means arranged between the stationary 36 and mobile 45 parts of the bearing unit, said sealing means (43, 44) preventing the lubricant from penetrating out of the bearing unit.

10. Hydrodynamic slide bearing unit as claimed in claim 2, wherein the annular shaft sleeve (50) has a radial extension such as to accommodate at either end surface an annular seat or recess (60, 61) between the second race (51) and the inner cylindrical surface for receiving the shaft or journal; annular sealing elements (58, 59) mounted in said seats (60, 61) and adapted for rotary sealing contact against annular plane side discs (62, 63) of the ends of the housing (53).

11. Hydrodynamic slide bearing unit as claimed in claim 10 wherein at one or both ends of the annular cylindrical shaft sleeve race (51) there is formed a truncated conical bearing race (54, 55) having its base adjacent the circular-cylindrical bearing race (51), said truncated bearing race allowing an axial load on the bearing unit.

12. Hydrodynamic slide bearing unit as claimed in claim 2, wherein the bearing unit consists of a combined radial and axial bearing allowing axial and radial loads in either direction as well as some angular deviation (α) of the shaft relative to the housing by comprising

—an outer annular housing (73) having a first stationary, inwardly turned spherical bearing race (71),

—an annular shaft sleeve (70) fixed to the shaft having a second spherical bearing rotating race formed on the surface of a spherical ball having its center (70') on the axis of rotation, adapted to coact with the first spherical bearing race (71) as a hydrodynamic bearing during the relative rotation of the races,

—relief openings extending mainly perpendicular to the shaft along part of the periphery of the first spherical bearing race.

13. Hydrodynamic slide bearing unit as claimed in claims 1 or 2, wherein the bearing unit consists of

—an axial bearing comprising an annular shaft sleeve (100) taking the form of a spherical cap defined by two spherical coaxial surfaces (101, 102) the axes of which concide with the axis of rotation and further defined by an outer cylindrical surface (103) the axis of which also coincides with the axis of rotation, the spherical surfaces of the cap being respectively convex and concave and forming bearing races (101, 102),

—an outer annular housing (110) defined by an outer cylindrical wall (111) joined to annular end plates (112, 113) said housing (110) having two or more slide bearing structures in the form of circular sectors and having sector-shaped bearing supports (126, 127) arranged in pairs to coact with the respective opposite convex (101) and concave (102) spherical races of the cap (100).

14. Hydrodynamic slide bearing unit as claimed in Claim 13, wherein the oil compartment, the feed opening (128, 130) and outtake means (124, 125) of a circular sector slide bearing structure are bounded by radial walls (116, 117) extending from the annular end walls (112, 113) of the bearing unit; the radial walls (116, 117) defining the distance between the support plates (120, 121) and hence also defining the play between the stationary circular sector races and the rotating cap-shaped sleeve (100).

**Patentansprüche**

1. Hydrodynamisches Gleitlager mit zwei gegenseitig beweglichen Gleitflächen, und zwar einer ersten Gleitfläche (3) in einem Gehäuse und einer zweiten Gleitfläche (1) auf einer Wellenbuchse, wobei sich zwischen den zwei Gleitflächen in eine flüssige Schmiermittelschicht (4) mindestens einer lasttragenden Druckzone (9) aufbaut, deren Druck (p) in Bewegungsrichtung von einem Anfangsdruck ($p_0$) im vorderen Abschnitt der Druckzone (16) auf einen höheren Druck ($p_m$) im Bereich der Mitte der Druckzone (16) steigt und dann auf den Anfangsdruck ($p_0$) absinkt und das Lager

mindestens eine Schmiermittel-Zufuhröffnung (5) an oder vor dem in Flußrichtung vorderen Teil der Druckzone,

ein Abzugsorgan zum Aufsammeln von Schmiermittel aus der Druckzone und

ein Rückführorgan für Schmiermittel vom Abzugsorgan zur Schmiermittelschicht in der lasttragenden Druckzone durch die Schmiermittel-Zuführöffnung (5) umfaßt, dadurch gekennzeichnet, daß

das Schmiermittel ein definiertes Volumen hat,

das Abzugsorgan der Gleitlagersektion längliche Druckentlastungsöffnungen (14, 15; 41, 42, 41', 42') bestimmter Länge aufweist, die stromabwärts der Zuführöffnung (13; 37, 37') beidseits der Druckzone (16; 39, 39') liegen und sich im wesentlichen in Bewegungsrichtung erstrecken, um die Teile (17, 18; 43, 44) der Lagerflächen zu entlasten, die außerhalb der Entlastungsöffnungen für den in der hydrodynamischen lasttragenden Druckzone herrschenden hohen Druck ($p_m$) liegen und dadurch den Leckagefluß senkrecht zur Flußrichtung zu eliminieren und das Schmiermittel-Volumen auf einen über dem Anfangsdruck ($p_0$) liegenden höheren Druck zu Rückführorganen überführen, die außerhalb der Grenzschicht der Gleitflächen liegen und eine geschlossene ringförmige Ölkammer (28) in einem außerhalb der Gleitflächen vorgesehenen Raum aufweisen, und durch eine vom höheren Zufuhrdruck und dem niedrigeren Auslaufdruck ($p_0$) hervorgerufene Förderwirkung das Schmiermittelvolumen über die Ölkammer zur Zufuhröffnung (13; 37, 37') überleiten,

und das Schmiermittel-Volumen somit durch—nacheinander—die Zufuhröffnung, die Druckzonen-Grenzschicht, das Abzugsorgan, das Rückführorgan mit der Ölkammer und zurück zur Zufuhröffnung in einem geschlossenem Kreislauf pumpen, der ganz innerhalb des Gleitlagers eingeschlossen ist.

2. Hydrodynamisches Gleitlager nach Anspruch 1, gekennzeichnet, durch

ein äußeres ringförmiges Gehäuse (19) zur Anbringung in einem Lagerstuhl mit einem ersten nach innen gewendeten Gleitlagerring (23) in Form einer Rotationsfläche,

eine ringförmige Wellenbuchse (20) zur Aufnahme der Welle oder des Wellenzapfens (21) und mit einem nach außen gewendeten rotierbaren, mit dem ersten Lagerring (23) als ein hydrodynamisches Gleitlager während der Relativdrehung der Lagerringe zusammenwirkenden zweiten Gleitlagerring, und

ringförmige Dichtungsringe (30) zwischen dem ortsfesten Gehäuse (19) und der mobilen Buchse (20), die das Schmiermittel am Ausdringen aus der Lagereinheit hindern.

3. Hydrodynamisches Gleitlager nach Anspruch 2, dadurch gekennzeichnet, daß die Lagereinheit aus einem Radiallager besteht, das zylindrische Lagerringe aufweist, die mit sich längs eines Teils des Umfanges einer ersten zylindrischen, im ortsfesten Gehäuse gebildeten Gleitfläche erstreckenden Entlastungsöffnungen (14, 15) versehen ist, wobei die Dichtungsorgane (30) aus axial außerhalb jeder Entlastungsöffnung angebrachten Dichtungsringen bestehen.

4. Hydrodynamisches Gleitlager nach Anspruch 2, dadurch gekennzeichnet, daß wenigstens eine Verbindung zwischen der Ölkammer (28) und einer im ortsfesten Laufring auf der unbelasteten Seite des hydrodynamischen Lagers angebrachten Zufuhröffnung (13) vorgesehen ist.

5. Hydrodynamisches Gleitlager nach Anspruch 4, dadurch gekennzeichnet, daß die Druckentlastungsöffnungen (14, 15) aus Druckentlastungsnuten (14, 15) bestehen, die in gewissem Abstand innerhalb der Dichtungen (30) im ortsfesten Laufring (23) auf der druckbelasteten Seite desselben liegen, vorzugsweise innerhalb eines Winkels von 90° und 270° auf dem Laufringumfang, wobei der Winkel der Zufuhröffnung 0° beträgt und die Nuten (14, 15) mit der Ölkammer (28) verbunden sind.

6. Hydrodynamisches Gleitlager nach Anspruch 5, dadurch gekennzeichnet, daß eine Öffnung (13) diametral gegenüber den Druckentlastungsnuten (14, 15) zur Versorgung der Schmiermittelschicht mit Öl aus der Ölkammer (28) liegt.

7. Hydrodynamisches Gleitlager nach mindestens einem der vorstehenden Ansprüche, dadurch gekennzeichnet, daß die Ölkammer (28) im äußeren Gehäuse (29) vorgesehen ist und durch zwei konzentrische Rohre (24, 27) und zwei flachseitige Ringscheiben (25, 26) mit Verbindungsbohrungen (35) mit einer Kammer zwischen den Seitenscheiben und den Dichtungsringen (30) aufweisen, wobei die Ringdichtungen (30) außerhalb dieser Scheiben liegen und in Dichtungskontakt mit der inneren Wellenbuchse (20) stehen.

8. Hydrodynamisches Gleitlager nach Anspruch 1 oder 2, dadurch gekennzeichnet, daß das Lager ein Axiallager ist, das mindestens zwei Gleitlagersektionen aufweist, die quer zur Rotationsachse gerichtete Lagerflächen haben, wobei jede Sektion eine Schmiermittelschicht aufweist, die in Bewegungsrichtung konvergiert und so eine lasttragende Druckzone (39, 39') bildet, die Teil einer ringförmigen Lauffläche ist, und außerdem die Zufuhröffnungen (37, 37') sich radial erstrecken, während die Entlastungsöffnungen (41, 42, 41', 42') Teile eines kreis- oder bogenförmigen Weges jeweils außerhalb und innerhalb der Druckzonen (39, 39') sind und die Dichtungen (43, 44) aus ringförmigen, zylindrischen Axialdichtungen (43, 44) bestehen, die jeweils außerhalb und innerhalb der Entlastungsöffnungen (41, 42, 41', 42') angebracht sind.

9. Hydrodynamisches Gleitlager nach Anspruch 8, dadurch gekennzeichnet, daß es zwischen dem ortsfesten (36) und dem mobilen (45) Teil der Lagereinheit vorgesehene Dichtungen (43, 44) umfaßt, die das Schmiermittel daran hindern, aus der Lagereinheit auszudringen.

10. Hydrodynamisches Gleitlager nach Anspruch 2, dadurch gekennzeichnet, daß die ringförmige Wellenbuchse (50) eine solche radiale Abmessung hat, daß sie an jeder Stirnfläche einen ringförmigen Sitz oder Absatz (60, 61) zwischen der zweiten Laufffläche (51) und der inneren zylindrischen Oberfläche zur Aufnahme der Welle oder des Wellenzapfens aufweist, sowie daß ringförmige Dichtungselemente (58, 59) auf den genannten Sitzen (60, 61) angebracht sind, die in Drehdichtungskontakt mit ringförmigen Seitenscheiben (62, 63) an den Enden des Gehäuses (53) stehen.

11. Hydrodynamisches Gleitlager nach Anspruch 10, dadurch gekennzeichnet, daß an einem oder beiden Enden der zylindrischen Wellenbuchsenlaufffläche (51) eine kegelstumpfartige Lagerlaufffläche (54, 55) angeformt ist, deren Grundfläche im Bereich der kreisförmig-zylindrischen Lagerlaufffläche (51) liegt, wobei die kegelstumpfförmige Lagerlaufffläche eine Axial belastung der Lagereinheit gestattet.

12. Hydrodynamisches Gleitlager nach Anspruch 2, dadurch gekennzeichnet, daß die Lagereinheit ein kombiniertes Axial-Radiallager ist, das sowohl axiale und radiale Belastung in beiden Richtungen als auch abgewinkelte (α) Wellenrichtung gegenüber dem Lagergehäuse gestattet, da es

ein äußeres ringförmiges Gehäuse (73) mit einer ersten ortsfesten, nach innen gerichteten sphärischen Lagerlaufffläche (71) aufweist

eine an der Welle befestigte, ringförmige Wellenbuchse (70) hat, die eine zweite sphärische, an der Oberfläche einer sphärischen Kugel angeformte Lagerlaufffläche aufweist, deren Mittelpunkt (70') auf der Rotationsachse liegt und die dazu dient, mit der ersten sphärischen Lagerlaufffläche (71) als ein hydrodynamisches Lager während der Rotation der Laufflächen zusammenzuwirken, sowie

Entlastungsöffnungen hat, die sich hauptsächlich senkrecht zur Welle längs eines Teiles der Peripherie der ersten sphärischen Lagerfläche erstrecken.

13. Hydrodynamisches Gleitlager nach Anspruch 1 oder 2, dadurch gekennzeichnet, daß die Lagereinheit aus

einem Axiallager mit einer ringförmigen Wellenbuchse (100) in Form einer sphärischen Haube, gebildet durch zwei sphärische koaxiale Flächen (101, 102), deren Achsen mit der Drehachse zusammenfallen, sowie durch eine äußere zylindrische Fläche (103), deren Achse ebenfalls mit der Drehachse zusammenfällt, wobei die sphärischen Flächen der Haube jeweils konvex bzw. konkav sind und die Lagerlaufflächen (101, 102) bilden, besteht, sowie aus

einem äußeren ringförmigen Gehäuse (110), gebildet aus einer äußeren mit ringförmigen Endblechen (112, 113) verbundenen zylindrischen Wand (111), das zwei oder mehr Gleitlager-Strukturen in Form kreisförmiger Sektoren sowie sektorförmige, paarweise angeordnete Lagerträger (126, 127) hat, die mit der jeweiligen gegenüberliegenden konvexen (101) und konkaven (102) sphärischen Laufffläche der Haube zusammenwirken.

14. Hydrodynamisches Gleitlager nach Anspruch 13, dadurch gekennzeichnet, daß die ölkammer, die Zufuhröffnungeb (128, 138) und Abzugsorgane (124, 125) eines kreissektorförmigen Gleitlagers durch Radialstirnwände (116, 117) in ihrer Größe begrenzt sind, die von den ringförmigen Stirnwänden (112, 113) der Lagereinheit ausgehen, wobei die Radialwände (116, 117) den Abstand zwischen den Halteblechen (120, 121) und somit auch das Spiel zwischen den Laufflächen der ortsfesten Kreissektoren und der umlaufenden haubenförmigen Buchse (100) bestimmen.

**Revendications**

1. Ensemble de palier lisse hydrodynamique comportant deux surfaces relativement mobiles, une première surface d'appui (3) dans un carter et une deuxième surface d'appui (1) sur un manchon d'arbre, entre lesdites surfaces étant composée, dans une couche de lubrifiant fluide (4), au moins une zone de pression d'appui (9) dont la pression (p), dans la direction du mouvement, augmentera en passant d'une pression initiale ($p_0$) dans la partie frontale de la zone de pression (16) à une pression plus haute ($p_m$) autour de la partie la plus centrale de la zone de pression (16) et puis diminuera en passant à la pression initiale ($p_0$), le palier comportant

au moins un orifice d'alimentation pour lubrifiant dans ou devant la partie de la zone de pression qui est la plus avancée vue dans la direction du flux,

un moyen de sortie pour collecter le lubrifiant sortant de la zone de pression et

un moyen de retour pour ramener le lubrifiant collecté dans le moyen de sortie jusqu'à la couche de lubrifiant de la zone de pression d'appui par ledit orifice d'alimentation (5), caractérisé en ce que

le lubrifiant fluide est d'un volume déterminé,

le moyen de sortie de la section du palier lisse comporte des orifices détendeurs oblongs (14, 15; 41, 42, 41', 42') d'une longueur définie situés en aval de l'orifice d'alimentation (13; 37, 37') des deux côtés de la zone de pression (16; 39, 39') et s'étendant généralement dans la direction du mouvement, afin de décharger les parties (17, 18; 43, 44) des surfaces du palier situées à l'extérieur des orifices détendeurs de la haute pression ($p_m$) régnant dans la zone de pression hydrodynamique d'appui, éliminant ainsi le flux de dispersion perpendiculaire à la direction du flux et de transporter le volume de lubrifiant à une pression plus haute que la pression initiale ($p_0$) vers

le moyen de retour situé hors de la couche limite des surfaces d'appui et comportant un compartiment d'huile annulaire fermé (28) aménagé dans un espace à l'extérieur des surfaces d'appui, et de faire passer, grâce à l'effet de pompe produit par la pression d'entrée plus haute et la pression de sortie plus basse ($p_0$), le volume de lubrifiant par le compartiment d'huile et jusqu'à l'orifice d'alimentation (13; 37, 37'),

le volume de lubrifiant étant ainsi pompé à travers, à tour de rôle, l'orifice d'alimentation—la couche limite de la zone de pression—le moyen de sortie—le moyen de retour avec le compartiment d'huile pour retourner à l'orifice d'alimentation dans une circulation en circuit fermé complètement confinée à l'intérieur de l'ensemble de palier.

2. Ensemble de palier lisse hydrodynamique suivant la revendication 1, caractérisé en ce qu'il comporte

un carter annulaire extérieur (19) adapté à être monté dans un siège de palier et comportant une première surface d'appui (23) tournée vers l'intérieur, ayant la forme d'une surface de révolution,

un manchon d'arbre annulaire (20) destiné à recevoir l'arbre ou le tourillon (21) et comportant une seconde surface d'appui rotative tournée vers l'extérieur adaptée à interagir avec la première surface d'appui (23) comme un palier hydrodynamique pendant la rotation relative des surfaces d'appui,

des moyens d'étanchéité (30) aménagés entre le carter stationnaire (19) et le manchon mobile (20) empêchant le lubrifiant de sortir de l'ensemble de palier.

3. Ensemble de palier lisse hydrodynamique suivant la revendication 2, caractérisé en ce que l'ensemble de palier est constitué par un palier radial à surfaces d'appui cylindriques, que les orifices détendeurs (14, 15) s'étendent sur une partie de la circonférence d'une première surface d'appui cylindrique formée dans le carter stationnaire, et que les moyens d'étanchéité (30) se composent de bagues d'étanchéité aménagées axialement devant chaque orifice détendeur.

4. Ensemble de palier lisse hydrodynamique suivant la revendication 2, comportant au moins une communication entre le compartiment d'huile (28) et un orifice d'alimentation (13) aménagé dans la surface d'appui stationnaire du côté détendu du palier hydrodynamique.

5. Ensemble de palier lisse hydrodynamique suivant la revendication 4, dans lequel les orifices détendeurs de pression (14, 15) sont constitués par des rainures de détente (14, 15) situées à quelque distance l'une de l'autre à l'intérieur des éléments d'étanchéité (30) de la surface d'appui stationnaire (23) du côté chargé de la surface d'appui, de préférence dans un angle compris entre 90° et 270° le long de la circonférence de la surface d'appui, l'angle de l'orifice d'alimentation étant 0°, lesdites rainures étant reliées au compartiment d'huile (28).

6. Ensemble de palier lisse hydrodynamique suivant la revendication 5, comportant un orifice (13) situé de manière à être diamétralement opposé aux rainures de détente (14, 15) pour assurer l'alimentation d'huile depuis le compartiment d'huile (28) jusqu'à la couche de lubrifiant.

7. Ensemble de palier lisse hydrodynamique suivant l'une quelconque des revendications précédentes, dans lequel le compartiment d'huile (28) est aménagé dans le carter extérieur (29) et délimité par deux tubes concentriques (24, 27) et par deux disques latéraux plans et annulaires (25, 26) comportant des canaux (35) assurant la communication avec une chambre située entre les disques latéraux et les bagues d'étanchéité (30), les bagues d'étanchéité (30) étant aménagées à l'extérieur desdits disques et étant en contact d'étanchéité avec le manchon d'arbre intérieur (20).

8. Ensemble de palier lisse hydrodynamique suivant la revendication 1 ou la revendication 2, dans lequel le palier est un palier axial comportant au moins deux sections de palier lisse avec des surfaces d'appui aménagées transversalement par rapport à l'axe de rotation, chaque section comportant une couche de lubrifiant convergeant dans la direction du movement et formant ainsi une zone de pression d'appui (39, 39') faisant partie d'une surface d'appui annulaire, les orifices d'alimentation (37, 37') ont une étendue radiale, tandis que des orifices détendeurs (41, 42, 41', 42') font partie d'une ligne circulaire ou voûtée à l'extérieur et à l'intérieur respectivement des zones de pression (39, 39'), et les moyens d'étanchéité (43, 44) sont constitués par des joints d'étanchéité axiaux annulaires cylindriques (43, 44) aménagés à l'extérieur et à l'intérieur respectivement des orifices détendeurs (41, 42, 41', 42').

9. Ensemble de palier lisse hydrodynamique suivant la revendication 8, comportant des moyens d'étanchéité aménagés entre la partie stationnaire (36) et la partie mobile (45) de l'ensemble de palier, lesdits moyens d'étanchéité (43, 44) empêchant le lubrifiant de sortir de l'ensemble de palier.

10. Ensemble de palier lisse hydrodynamique suivant la revendication 2, dans lequel le manchon d'arbre annulaire (50) a une extension radiale permettant de tenir sur chaque surface d'extrémité un siège ou enfoncement annulaire (60, 61) entre la seconde surface d'appui (51) et la surface cylindrique intérieure pour recevoir l'arbre ou le tourillon; des éléments d'étanchéité annulaires (58, 59) étant montés dans lesdits sièges (60, 61) et adaptés à assurer un contact rotatif d'étanchéité contre des disques latéraux plans annulaires (62, 63) des extrémités du carter (53).

11. Ensemble de palier lisse hydrodynamique suivant la revendication 10, dans lequel, à l'une des extrémités ou aux deux extrémités de la surface d'appui (51) du manchon d'arbre annulaire, est aménagée une surface d'appui conique tronquée (54, 55) dont la base est adjacente à la surface d'appui circulaire-cylindrique (51), ladite surface d'appui tronquée permettant une charge axiale sur l'ensemble de palier.

12. Ensemble de palier lisse hydrodynamique suivant la revendication 2, dans lequel l'ensemble de palier est constitué par un palier combiné, radial et axial, permettant des charges axiales et radiales dans une direction ou dans l'autre ainsi qu'une certaine déviation angulaire (α) de l'arbre par rapport au carter caractérisé en ce qu'il comporte

—un carter annulaire extérieur (73) ayant une première surface d'appui sphérique stationnaire, tournée vers l'intérieur (71),

—un manchon d'arbre annulaire (70) fixé à l'arbre ayant une seconde surface d'appui sphérique rotative aménagée sur la surface d'une bille sphérique ayant son centre (70') sur l'axe de rotation, adaptée à interagir avec la première surface d'appui sphérique (71) comme un palier hydrodynamique pendant la rotation relative des surfaces d'appui,

—des orifices détendeurs s'étendant pour l'essentiel perpendiculairement à l'arbre le long d'une partie de la périphérie de la première surface d'appui sphérique.

13. Ensemble de palier lisse hydrodynamique suivant la revendication 1 ou la revendication 2, dans lequel l'ensemble de palier est constitué par

—un palier axial comportant un manchon d'arbre annulaire (100) ayant la forme d'un chapeau sphérique délimité par deux surfaces coaxiales sphériques (101, 102) dont les axes coïncident avec l'axe de rotation et délimité encore par une surface cylindrique extérieur (103) dont l'axe coïncide, lui aussi, avec l'axe de rotation, les surfaces sphériques du chapeau étant convexes et concaves respectivement et formant des surfaces d'appui (101, 102),

—un carter annulaire extérieur (110) délimité par une paroi cylindrique extérieure (111) liée à des plaques d'extrémité annulaires (112, 113), ledit carter (110) ayant deux ou plusieurs structures de palier lisse sous forme de secteurs circulaires et ayant des supports de palier (126, 127) en forme de secteurs aménagés par paires pour interagir avec les surfaces d'appui sphériques opposées convexe (101) et concave (102) respectivement du chapeau (100).

14. Ensemble de palier lisse hydrodynamique suivant la revendication 13, dans lequel le compartiment d'huile, l'orifice d'alimentation (128, 130) et le moyen de sortie (124, 125) d'une structure de secteur de palier lisse circulaire sont délimités par des parois radiales (116, 117) s'étendant à partir des parois d'extrémité annulaires (112, 113) de l'ensemble de palier; les parois radiales (116, 117) définissant la distance entre les plaques de support (120, 121) et, par là, définissant aussi le jeu entre les surfaces d'appui stationnaires des secteurs circulaires et la manchon rotatif en forme de chapeau (100).

FIG.1

FIG.2

FIG.3

FIG.4

1

FIG.5

FIG.6

FIG.7

EP 0 258 210 B1

FIG.8

FIG.9

FIG. 10

FIG.11

Fig 12

Fig 13

Fig 14

Fig 15

5

Fig 16

Fig 17

Fig 18

Fig 19

Fig 20